# EUROPÄISCHE PATENTSCHRIFT

(11) **EP 4 680 869 B1**
(45) Veröffentlichungstag und Bekanntmachung des Hinweises auf die Patenterteilung: **13.05.2026**
(21) Anmeldenummer: 24775856.8
(22) Anmeldetag: 18.09.2024
(51) Int. Cl.: F16C 29/02, F16C 32/06

(54) **LAGERANORDNUNG, LINEARACHSSYSTEM MIT DIESER LAGERANORDNUNG SOWIE ANLAGE MIT DIESEM LINEARACHSSYSTEM**
BEARING ASSEMBLY, LINEAR AXIS SYSTEM HAVING SAID BEARING ASSEMBLY, AND INSTALLATION HAVING SAID LINEAR AXIS SYSTEM
ENSEMBLE PALIER, SYSTÈME D'AXE LINÉAIRE COMPORTANT LEDIT ENSEMBLE PALIER, ET INSTALLATION COMPORTANT LEDIT SYSTÈME D'AXE LINÉAIRE

(30) Priorität: 05.10.2023 DE 102023127135
(43) Veröffentlichungstag der Anmeldung: 21.01.2026
(73) Patentinhaber: Jenaer Antriebstechnik GmbH, 07745 Jena (DE)
(72) Erfinder: HILLE, Volker, 86971 Peiting (DE)
(74) Vertreter: Engel, Christoph Klaus
(86) Internationale Anmeldenummer: PCT/EP2024/076087
(87) Internationale Veröffentlichungsnummer: WO 2025/073473

(56) Entgegenhaltungen:
- JP-A- 2006 057 789
- US-A- 6 149 306
- US-B2- 7 307 689

## Beschreibung

Die vorliegende Erfindung hat eine Lageranordnung mit einem Läufer und einer aerostatischen Lagereinheit zum Gegenstand, insbesondere eine Lagerordnung für ein Linearachssystem wie beispielsweise einen Kurzhubaktor. Die Erfindung betrifft weiterhin ein Linearachssystem mit einer solchen Lageranordnung und einer Antriebseinheit, die dazu eingerichtet ist, den Läufer relativ zur Lagereinheit in Richtung von dessen Längsachse hin- und herzubewegen. Darüber hinaus betrifft die Erfindung eine Anlage zur Fertigung und/oder Bearbeitung von Bauteilen, die mindestens ein Linearachssystem mit der Lageranordnung umfasst.

Lageranordnungen mit einem in einer Lagereinheit linear hin- und her beweglichen Läufer finden vielfältige Anwendungen, beispielsweise im Bereich der Robotik, für Positionierungs-, speziell Bestückungsaufgaben und/oder zur Bearbeitung von Werkstücken. Insbesondere zur Realisierung von hochgenauen linearen Bewegungen mit hoher Beschleunigung und/oder häufiger Umkehrung der Bewegungsrichtung werden vielfach kurzhubige Linearmotoren eingesetzt. Zur reibungsfreien Bewegung des Läufers kann dieser vorteilhaft luftgelagert sein.

Beispielsweise aus der DE 10 2009 054 953 A1 ist ein Kurzhublinearmotor bekannt, bei dem erste bzw. zweite Polelemente jeweils benachbart in einer jeweiligen Kammstruktur angeordnet sind. Mittels Bestromung können dann einander entgegengesetzte Magnetpole erzeugt und so eine lineare Hin- und Her-Bewegung eines Sekundärteils relativ zu einem Primärteil realisiert werden. Das Sekundärteil ist dabei vom Primärteil durch einen Luftspalt beabstandet.

In der DE 10 2013 102 922 A1 ist ein Linearmotor mit einem Läufer beschrieben, der Permanentmagnete aufweist und luftgelagert zwischen einem Stator und einer Eisenrückschlusseinrichtung angeordnet ist. Dabei sind die Permanentmagnete von der Eisenrückschlusseinrichtung beabstandet. So sollen einerseits eine vorteilhafte Wirkung der Eisenrückschlusseinrichtung auf die Kraftentfaltung erzielt und andererseits ein besonders leichter Läufer realisiert werden.

Die EP 1 917 447 B1 offenbart eine statische Lagerungsvorrichtung mit Magnetvorspannungs- und Bewegungsfehlerkorrekturfunktionen. Die Lagerungsvorrichtung weist eine Führung und einen Tisch auf, an dem unter Ausbildung eines Spaltes Segmente statischer Lager befestigt sind. An beiden Seiten des Tischs sind dabei Magnet-Vorspannungseinheiten jeweils mit einem Permanentmagneten, einem Kern und einer auf den Kern gewickelten Spule angeordnet.

Die US 3 272 568 A offenbart eine Führungsvorrichtung mit einer Führung und einem relativ zur Führung zu führenden Körper, mit dem ein Werkzeug verbunden sein kann. Zwischen den ortsfesten und den beweglichen Elementen wird dabei ein Gaskissen aufrechterhalten.

Bei derartigen bekannten Luftlagerungen müssen Abmessungsänderungen berücksichtigt werden, die aus thermischen Ausdehnungen resultieren. Diese Problematik wird in der EP 1 779 967 A2 adressiert. Darin ist die Gestaltung der Schlittenführung einer Fast-Tool-Anordnung insbesondere für Drehmaschinen zur

Bearbeitung von optischen Werkstücken offenbart. Die Anordnung umfasst einen Tauchspulenantrieb und einen Schlitten für linear reziprozierende Bewegungen. Der Schlitten führt einen Drehmeißel und ist aus zwei planparallelen, senkrecht zueinander stehenden Platten zusammengesetzt, so dass er den Querschnitt eines T-Profils mit einem Steg und zwei entgegengesetzt davon abstehenden Flanschseiten aufweist. Dabei sind der Steg und die Flanschseiten zwischen jeweiligen Paaren aus Lagerelementen angeordnet. Damit sollen Abmessungsänderungen des Schlittens infolge von Erwärmung minimiert sowie eine hohe Steifigkeit des Schlittens bei geringer Masse erzielt werden.

Die DE 10 2004 012 204 B3 beschreibt ein Winkelluftlager mit linear zueinander verschiebbaren länglichen Führungsteilen. Das Winkelluftlager besitzt zwei linear zueinander verschiebbare längliche Führungsteile, zwischen denen zwei zueinander v-förmig gewinkelte Führungsebenen ausgebildet sind und die mit paarweise einander zugewandten Führungsflächen ausgerüstet sind. Eine der Führungsflächen ist an einem Schwenkteil ausgebildet, das um eine zur Verschieberichtung parallele Gelenkachse des zugehörigen Führungsteils schwenkbar gelagert ist. Dadurch können bei vermindertem Herstellungsaufwand Winkelabweichungen zwischen den Führungsflächen vermieden werden.

Die US 6 149 306 A zeigt ein Gleitlager, in welchem zwischen den zueinander gleitenden Lagerflächen eines beweglichen Körpers und eines feststehenden Körpers Luftströme erzeugt werden. Dafür wird Druckluft durch Düsen zwischen den Lagerflächen auf atmosphärischen Druck entspannt. Durch diese Luftströme wird der statische Druck zwischen den Lagerflächen reduziert, sodass zwischen dem beweglichen und dem feststehenden Körper wirkende Druckkräfte entstehen. Lagerflächen und Luftströme sind so aufeinander abgestimmt, dass sich der bewegliche Körper in einem kräftefreien Gleichgewichtszustand befindet, wenn er eine Position einnimmt, in der die Lagerflächen des beweglichen Körpers nicht mit den Lagerflächen des feststehenden Körpers in Kontakt sind.

Der vorliegenden Erfindung liegt die Aufgabe zugrunde, eine Lageranordnung, ein Linearachssystem und eine Fertigungs- bzw. Bearbeitungsanlage mit verringerter Empfindlichkeit gegenüber thermischen Einflüssen bereitzustellen.

Die Aufgabe wird gelöst durch eine Lageranordnung gemäß Anspruch 1, ein Linearachssystem gemäß Anspruch 9 und eine Anlage gemäß Anspruch 10. Vorteilhafte Ausführungsformen sind in den Unteransprüchen, der Beschreibung und den Figuren offenbart.

Eine Lageranordnung gemäß der vorliegenden Erfindung umfasst einen Läufer und eine aerostatische Lagereinheit. Sie kann insbesondere dazu ausgebildet sein, an einer Kurzhubachse eingesetzt zu werden.

Der Läufer weist eine Längsachse auf, in deren Richtung er relativ zur Lagereinheit linear hin und her beweglich ist. Dabei ist ein Werkzeug so dauerhaft oder abnehmbar am Läufer befestigt oder zu befestigen, dass sein Werkzeugwirkpunkt (auch als "tool centre point" bzw. kurz "TCP" bezeichnet) auf der Längsachse liegt. Bevorzugt kann das Werkzeug eine optische Einheit, insbesondere eine Linse oder dergleichen sein. Insbesondere kann der Läufer zur Befestigung des Werkzeugs ein Befestigungsmittel umfassen, dessen geometrisches Zentrum (betrachtet in einem Querschnitt senkrecht zur Längsachse) auf der genannten Längsachse des Läufers liegt. Ein solches Befestigungsmittel kann beispielsweise mindestens eine Gewindebohrung für eine jeweilige Befestigungsschraube, ein Außengewinde, mindestens eine Aufnahme für einen jeweiligen Fixierstift, eine Bajonettvorrichtung und/oder eine Klemmeinrichtung umfassen, mit dem/denen das Werkzeug oder ein mit ihm verbundener Halter am Läufer fixiert werden kann.

Der Läufer weist ferner mindestens zwei Flügel auf, die jeweils in der aerostatischen Lagereinheit eingespannt sind. Die Flügel erstrecken sich dabei jeweils radial zur Längsachse und stehen winklig zueinander, schließen also an der Längsachse einen Winkel zueinander ein, der zwischen 0° und 180° beträgt. Dabei können die Flügel an der Längsachse zusammenlaufen oder jeweils von einem Läuferkern abstehen, in dessen Zentrum die genannte Längsachse verläuft.

Insbesondere aufgrund der genannten Anordnung der Flügel und des befestigten bzw. zu befestigenden Werkzeugs relativ zur Längsachse und damit auch relativ zueinander erlaubt die erfindungsgemäße Lageranordnung zum einen eine hohe Steifigkeit in Lagerrichtung sowie eine reibungsfreie Lagerung und damit den Bedarf nur geringer Stellkräfte, weil nur eingeprägte Kräfte wie insbesondere die Gewichtskraft kompensiert werden müssen. Zum anderen ermöglicht sie eine wiederholbare und präzise Zentrierung des Werkzeugwirkpunkts unabhängig von einer jeweiligen thermisch bedingten Ausdehnung des Läufers. Die Position des Werkzeugwirkpunkts relativ zur Lagereinheit bzw. zu einer Rahmen- und/oder Gehäusestruktur, an der die Lageranordnung in ihrem Einbauzustand montiert sein kann, ändert sich also auch dann nicht senkrecht zur Bewegungsrichtung, wenn sich der Läufer durch Wärmeeinflüsse ausdehnt. Eine solche Ausdehnung kann vielmehr allenfalls eine Verschiebung des Werkzeugwirkpunktes in Richtung der Längsachse bewirken.

Auf diese Weise kann also eine temperaturbedingte Verlagerung der Werkzeugachse bereits im Sub-Mikrometerbereich verhindert und eine hochgenaue Position des Werkzeugs bzw. seines Werkzeugwirkpunkts sichergestellt werden, auch wenn äußere Temperatureinflüsse sich ändern und/oder eine Antriebseinheit des Läufers hohe Temperaturen entwickelt.

Die Angabe "Umfangsrichtung" bezieht sich hier und im Folgenden ebenso wie "radial" und "axial" auf die Längsachse, was zu besseren Lesbarkeit nicht immer erwähnt wird. Als "Längsachse" ist in dieser Schrift stets die besagte Längsachse des Läufers zu verstehen, auf der der Werkzeugwirkpunkt des befestigten oder zu befestigenden Werkzeugs liegt.

Vorzugsweise sind die Flügel symmetrisch zu einer jeweiligen Flügel-Symmetrieebene geformt, in der die Längsachse des Läufers verläuft. Insbesondere schneiden sich die Flügel-Symmetrieebenen der mindestens zwei Flügel dann also in der besagten Längsachse.

Insbesondere können die Flügel vorzugsweise jeweils als Platten ausgebildet sein, die sich bezogen auf die genannte Längsachse in radialer und axialer Richtung erstrecken; damit kann ein besonders leichter und zugleich gut von der aerostatischen Lagereinheit einzuspannender Läufer realisiert werden. Mindestens einer der Flügel kann dabei ein Viereck ausbilden, beispielsweise ein Trapez, insbesondere ein Parallelogramm oder sogar Rechteck. Vorzugsweise sind die mindestens zwei Flügel einander gleich geformt.

Die Flügel sind vorzugsweise zumindest teilweise in einem zwischen mindestens zwei Luftlagern der Lagereinheit ausgebildeten jeweiligen Zwischenraum angeordnet, wobei die Luftlager so justiert bzw. vorgespannt sind, dass zwischen ihnen und dem jeweiligen Flügel ein Luftspalt bleibt und so einen Kontakt mit dem Flügel verhindert wird.

Eine Zwischenraumbreite des jeweiligen Zwischenraums ist dabei vorzugsweise größer als die im Betrieb der Lageranordnung und/oder unter vorgesehenen Einsatzbedingungen maximal mögliche Flügeldicke des zumindest teilweise im Zwischenraum angeordneten Flügels; so bleibt in allen Betriebsmodalitäten ein Luftspalt zwischen Flügel und Luftlager erhalten und damit die Funktion der Lagereinheit zur kontakt- und damit reibungsfreien Lagerung gewahrt. Als "Zwischenraumbreite" ist dabei ein in Umfangsrichtung gemessener kleinster auftretender Abstand der den Zwischenraum begrenzenden, einander gegenüberstehenden Luftlager zu verstehen.

Gemäß einer vorteilhaften Ausführungsform einer erfindungsgemäßen Lageranordnung bilden die Flügel jeweils einen Schenkel eines kreuz- oder L- oder Y-förmigen, senkrecht zur Längsachse gebildeten Querschnitts des Läufers. Insbesondere kann der Läufer vorzugsweise spiegelsymmetrisch zu einer die Längsachse enthaltenden Läufer-Symmetrieebene ausgebildet sein, also so, dass eine derartige Läufer-Symmetrieebene mathematisch existiert.

Besonders bevorzugt ist eine Ausführungsvariante, bei welcher der Läufer mindestens oder genau zwei Flügel umfasst, die in Umfangsrichtung zueinander benachbart sind und dabei einen Winkel von 90° einschließen. Dadurch kann auf besonders einfache Weise eine präzise Positionierung des Läufers und damit des Werkzeugs in beiden Koordinatenrichtungen senkrecht zur Längsachse des Läufers realisiert werden. Ein solcher Läufer kann besonders stabil auch bei thermischer Ausdehnung in der aerostatischen Lagereinheit zentriert werden.

Speziell kann der Läufer genau vier Flügel umfassen, die mit den jeweils benachbarten Flügeln jeweils einen Winkel vom 90° einschließen. Ein solcher Läufer kann besonders stabil auch bei thermischer Ausdehnung in der aerostatischen Lagereinheit zentriert werden, zudem weist er eine besonders hohe Steifigkeit auf.

In Ausführungsformen, bei denen die Flügel wie oben erwähnt von einem Läuferkern abstehen, kann das Werkzeug vorzugsweise am Läuferkern befestigt oder zu befestigen sein. Insbesondere kann das oben genannte Befestigungsmittel zur Befestigung des Werkzeugs am Läufer bei entsprechenden Ausführungsformen vorzugsweise mindestens teilweise am Läuferkern angeordnet sein.

Der Läuferkern kann beispielsweise zylindrisch oder prismenartig ausgebildet sein. Er kann vorzugsweise dicker sein als die Flügel, also einen Durchmesser radial zur besagten Längsachse aufweisen, der größer ist als eine in Umfangsrichtung gemessene maximale jeweilige Flügeldicke, beispielsweise mindestens doppelt so groß oder sogar mindestens dreimal so groß wie die genannte Flügeldicke. Dadurch können eine besonders stabile Verbindung der Flügel sowie ggf. eine sichere Befestigung des Werkzeugs realisiert werden. Der Läuferkern kann mindestens teilweise hohl sein. Insbesondere kann er eine Durchführung (also einen Kanal) für eine oder mehrere elektrische Leitungen zur Verbindung des Werkzeugs mit einer Steuerungs- und/oder Betriebseinheit zum Betreiben des Werkzeugs ausbilden.

Gemäß einer vorteilhaften Ausführungsform ist der Läufer monolithisch ausgebildet. Dadurch können eine besonders präzise Formgebung und eine hohe Stabilität erreicht werden.

Das Werkzeug kann beispielsweise eine Pick-and-Place-Einheit, wie insbesondere einen Greifer und/oder einen Sauger umfassen und/oder einen Laser, ein Schneidwerkzeug, eine Markiernadel, einen Plasmabrenner und/oder ein Objektiv und/oder eine optische Linse und/oder ein Spiegel. Gemäß einer speziellen Ausführungsform ist das Werkzeug als ein Instrument zur Laserstrukturierung von Wafern ausgebildet.

Gemäß einer vorteilhaften Ausführungsform der vorliegenden Erfindung umfasst die Lageranordnung das (befestigte oder zu befestigende) Werkzeug.

Ein erfindungsgemäßes Linearachssystem umfasst eine erfindungsgemäße Lageranordnung und eine Antriebseinheit, die dazu eingerichtet ist, den Läufer der Lageranordnung in Richtung seiner Längsachse relativ zur aerostatischen Lagereinheit der Lageranordnung hin- und herzubewegen. Insbesondere kann das Linearachssystem als Kurzhubaktor ausgebildet sein. Er kann vorzugsweise eine Rahmen- und/oder Gehäusestruktur umfassen, an der die Lageranordnung montiert ist. Die Antriebseinheit, die vorzugsweise dazu eingerichtet ist, hochdynamische Bewegungen anzuregen, kann eine Tauchspule umfassen oder auf dem Moving-Magnet-Prinzip beruhen.

Eine erfindungsgemäße Anlage dient der Fertigung und/oder Bearbeitung von Bauteilen. Die Anlage umfasst mindestens ein erfindungsgemäßes Linearachssystem in einer Ausführungsform, bei der die Lageranordnung das am Läufer befestigte oder zu befestigende Werkzeug umfasst. Darüber hinaus kann die Anlage insbesondere eine Gestellstruktur umfassen, an welcher das mindestens eine Linearachssystem montiert und/oder an der ein jeweils zu bearbeitendes Werkstück oder Bauteil fixierbar ist.

Im Folgenden werden bevorzugte Ausführungsbeispiele der Erfindung anhand von Zeichnungen näher erläutert. Es versteht sich, dass einzelne Elemente und Komponenten auch anders kombiniert werden können als dargestellt. Bezugszeichen für einander entsprechende Elemente sind figurenübergreifend verwendet und werden ggf. nicht für jede Figur neu beschrieben. Es zeigen schematisch:
- Fig. 1a:: einen Querschnitt einer erfindungsgemäßen Lageranordnung in einer ersten exemplarischen Ausführungsform;
- Fig. 1b:: die Lageranordnung der Fig. 1a in perspektivischer Ansicht;
- Fig. 2a:: ein Linearachssystem mit der Lageranordnung in einer perspektivischen Ansicht;
- Fig. 2b:: das Linearachssystem der Fig. 2a von vorn; und
- Fig. 3:: einen Querschnitt einer weiteren exemplarischen Ausführungsform der erfindungsgemäßen Lageranordnung.

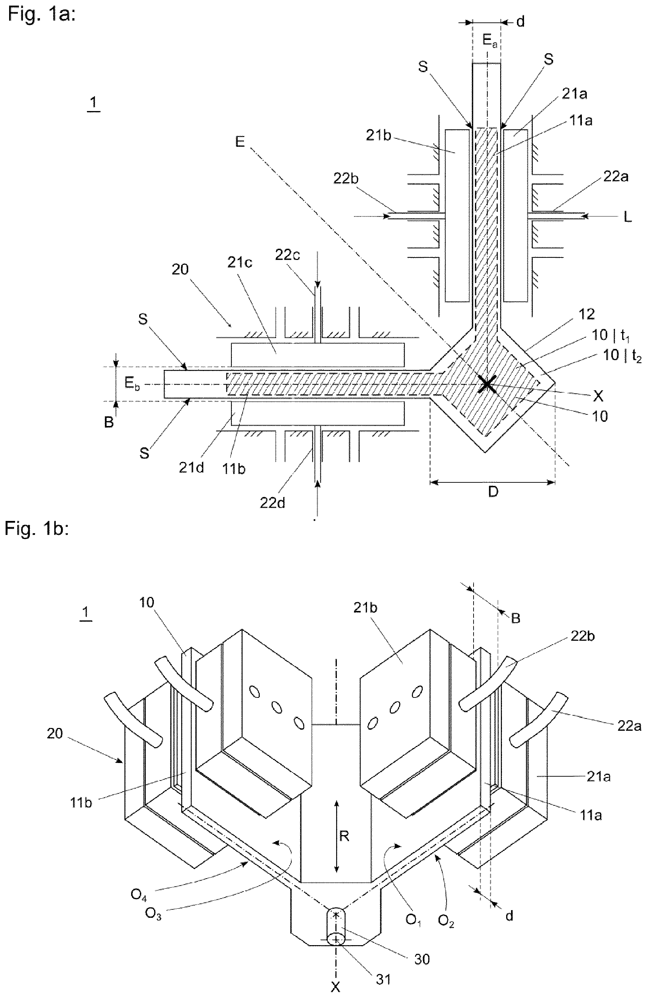

In den Figuren 1a, 1b ist eine Ausführungsform einer erfindungsgemäßen Lageranordnung 1 mit einem Läufer 10 und einer aerostatischen Lagereinheit 20 dargestellt. Die Fig. 1a zeigt dabei einen Querschnitt der Lageranordnung 1 orthogonal zu einer Längsachse X des Läufers 10, und die Fig. 1b bietet eine perspektivische Ansicht der Lageranordnung 1.

Wie in der Fig. 1b durch einen Doppelpfeil R gekennzeichnet, ist der Läufer in Richtung R seiner Längsachse X relativ zur Lagereinheit 20 hin und her beweglich, wodurch ein am Läufer 10 befestigtes, in der Fig. 1b schematisch dargestelltes Werkzeug 30 bedient werden kann. Das Werkzeug 30 ist dabei so am Läufer 10 befestigt, dass sein Werkzeugwirkpunkt (Tool Centre Point, TCP) 31 auf der Längsachse X des Läufers liegt.

In der Fig. 1a ist der Läufer 10 in zwei temperaturabhängigen Ausdehnungszuständen dargestellt, nämlich schraffiert und als 10|t₁ bezeichnet bei einer ersten Temperatur sowie als 10|t₂ bezeichnet in einem unter vorgesehenen Bedingungen maximal möglichen Ausdehnungszustand, der bei einer zweiten Temperatur eintritt, die - beispielsweise aufgrund äußerer Einflüsse und/oder infolge des Betriebs der Lageranordnung 1 - höher ist als die erste Temperatur.

Erfindungsgemäß bleibt die Längsachse X des in der Lagereinheit 20 eingespannten Läufers 10 in beiden (wie auch in allen nicht gezeigten weiteren möglichen) Ausdehnungszuständen an derselben Position. Dadurch wird gewährleistet, dass der Werkzeugwirkpunkt 31 des Werkzeugs sich bei Temperaturänderungen nicht verlagert. Damit ist das Werkzeug hochpräzise und wiederholbar zur Einwirkung auf eine genau festzulegende Position eines Bauteils einsetzbar.

Die genannte Beibehaltung der Position der Längsachse wird insbesondere durch die erfindungsgemäße Ausgestaltung des Läufers 10 mit (in der dargestellten Ausführungsform genau zwei) winklig zueinander angeordneten Flügeln 11a, 11b sichergestellt, die in der Lagereinheit 20 beidseitig eingespannt sind und sich jeweils radial zur Längsachse X erstrecken.

In der in den Figuren 1a, 1b gezeigten Ausführungsform stehen die einander gleich ausgebildeten Flügel 11a, 11b dabei jeweils von einem stabartigen, vorliegend prismenförmigen Läuferkern 12 ab, in dessen Zentrum die Längsachse X verläuft. Die Flügel 11a, 11b bilden dabei jeweilige Schenkel eines L-förmigen Querschnitts des Läufers 10, der spiegelsymmetrisch zu einer die Längsachse X enthaltenden Läufer-Symmetrieebene E geformt ist. Dadurch kann der Läufer besonders raumsparend ausgebildet sein. Insbesondere stehen die beiden Flügel 11a, 11b somit vorliegend senkrecht zueinander, schließen also einen (kleineren) Winkel von 90° ein. Dies ermöglicht eine besonders einfache und gleichwohl präzise Positionierung des Läufers mittels Druckluftzufuhr wie weiter unten beschrieben.

Dabei weisen die Flügel eine (vorliegend gleichmäßige) Flügeldicke d auf, die kleiner ist als ein Durchmesser D des Läuferkerns 12; in der Fig. 1a sind die Flügeldicke d und der Durchmesser D des Läuferkerns für den Läufer 10|t₂ mit maximalem Ausdehnungszustand eingezeichnet.

Die Flügel 11a, 11b sind dabei als ebene Platten ausgebildet, die entlang der Längsachse X verlaufen und sich damit also nicht nur radial, sondern auch axial zur Längsachse X erstrecken. Die Flügel 11a, 11b weisen jeweilige Flügel-Symmetrieebenen Eₐ, E_{b} auf, die sich in der Längsachse X des Läufers 10 schneiden, und zu denen die Flügel 11a, 11b jeweils spiegelsymmetrisch ausgebildet sind.

Die Flügel 11a, 11b sind jeweils teilweise in einem Zwischenraum zwischen je zwei zur Lagereinheit 20 gehörigen Luftlagern 21a, 21b, 21c, 21d angeordnet; einander in Umfangsrichtung entgegengesetzte Oberflächen O₁, O₂, O₃, O₄ jedes der Flügel stehen dabei also je einem der Luftlager 21a, 21b, 21c, 21d gegenüber und dienen diesen als Laufflächen. Wie in der Fig. 1b für den Flügel 11a gekennzeichnet, weist der jeweilige Zwischenraum eine Breite B auf, die größer ist als die Flügeldicke d des jeweils zumindest teilweise enthaltenen Flügels in einem unter vorgesehenen Bedingungen maximal möglichen Ausdehnungszustand.

Beispielsweise ergibt sich bei Nutzung von aus Aluminium bestehenden Flügeln mit einer Flügeldicke von 5 mm und einem Luftlagerspalt zwischen 3-6 µm pro Lager eine Flügeldickentoleranz von 6 µm. Bei einem thermischen Ausdehnungskoeffizienten der Aluminiumlegierung von 23,1*10⁻⁶ K⁻¹ bedeutet dies, dass sich die Temperatur des Flügels 11 um 52 K ändern kann, ohne Veränderung der Mittenausrichtung und der Funktion des Lagers. Wenn Stahl als Flügelwerkstoff benutzt wird (Ausdehnungskoeffizient 13*10⁻⁶ K⁻¹), ist ein Temperaturdelta von 93 K zulässig, ohne Beeinträchtigung der Funktionssicherheit des Lagers.

Mittels Luftzufuhr L durch jeweilige Drucklufteinlässe 22a, 22b, 22c, 22d hindurch wird, wie insbesondere der Fig. 1a zu entnehmen ist, jeweils ein Luftspalt S zwischen den Luftlagern 21a, 21b, 21c, 21d und den Flügeln 11a, 11b aufrechterhalten, so dass der Läufer 10 kontaktfrei in der Lagereinheit 20 eingespannt und in ihr somit reibungsfrei beweglich ist. Es treten somit nur geringe Stellkräfte auf, weil nur eine Gewichtskraft oder andere eingeprägte Kräfte kompensiert werden müssen.

Da der Werkzeugwirkpunkt 31 mit dem Läufer entlang der Längsachse X und damit der Schnittgerade der Flügel-Symmetrieebenen Eₐ, E_{b} hin und herbewegt wird, bleibt er bei thermischen Ausdehnungen des Läufers in einer konstanten Position in der z-y-Ebene. So kann eine hochdynamische Linearbewegung des Werkzeugs 30 mit hoher Präzision und Wiederholbarkeit realisiert werden, beispielsweise in einer Kurzhubanwendung.

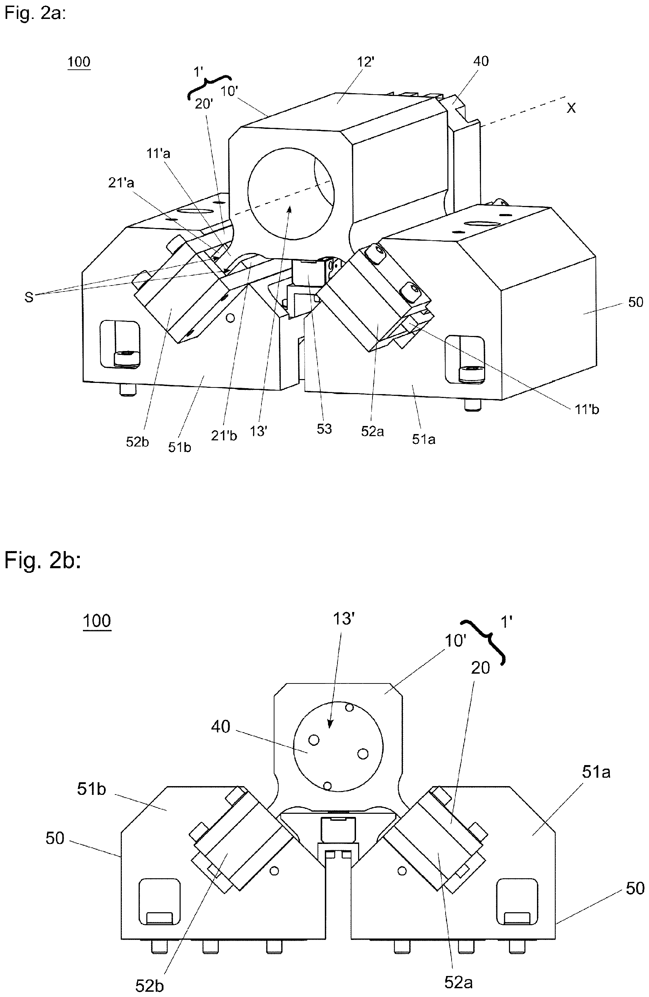

In der Fig. 2a ist in perspektivischer Ansicht ein erfindungsgemäßes Linearachssystem 100 gezeigt, welches eine Lageranordnung 1' mit einem Läufer 10' und einer aerostatischen Lagereinheit 20' umfasst; die Fig. 2b zeigt das Linearachssystem in einer Vorderansicht, also aus der Richtung eines bei Verwendung zu bearbeitenden Bauteils.

Wie bei der in den Figuren 1a, 1b gezeigten Ausführungsform weist der Läufer 10' des Linearachssystems 100 genau zwei plattenförmige Flügel 11'a, 11'b auf, die von einem Läuferkern 12' abstehen und sich dabei radial und axial zur Längsachse X des Läufers erstrecken. Wie ebenfalls bei der in den Figuren 1a, 1b dargestellten Ausführungsform sind die Flügel 11'a, 11'b dabei unter Ausbildung von Spalten S zwischen jeweiligen Luftlagern der aerostatischen Lagereinheit 20' eingespannt, von denen aufgrund der Perspektiven in den Figuren 2a, 2b nur die Luftlager 21'a, 21'b sichtbar sind.

Der Läuferkern 12' bildet dabei ein Befestigungsmittel 13' in Form einer zylindrischen Aufnahme aus, in die z.B. ein Befestigungszapfen eines nicht gezeigten, am Läufer 10' zu befestigenden, vorzugsweise drehsymmetrisch ausgebildeten Werkzeugs eingesteckt werden kann. Das Werkzeug kann insbesondere eine optische Linse sein, die in der zylindrischen Aufnahme angeordnet ist. Ein geometrisches Zentrum des Befestigungsmittels 13' liegt dabei auf der Längsachse X des Läufers 10'.

Durch den vorliegend hohlen Läuferkern 12' (und vorliegend insbesondere durch das Befestigungsmittel 13') hindurch können beispielsweise elektrische Leitungen zur Verbindung des Werkzeugs mit einer Steuerungs- und/oder Betriebseinheit für das Werkzeug geführt werden (nicht dargestellt). Insbesondere können zentral im Läuferkern Lichtleiter und freie Laserstrahlen geführt sein, sodass der Laserstrahl mit der Mittellinie des Läufers deckungsgleich läuft.

Das Linearachssystem 100 umfasst weiterhin eine Antriebseinheit 40 zum Hin- und Herbewegen des Läufers 10' relativ zur Lagereinheit 20' und in Richtung der Längsachse X; in der Fig. 2b ist die Antriebseinheit 40 durch den hohlen Läuferkern 12' hindurch sichtbar. Sie kann insbesondere eine Tauchspule umfassen oder auf dem Moving-Magnet-Prinzip beruhen.

Eine Rahmenstruktur 50 des Linearachssystems 100 umfasst zwei Führungsbacken 51a, 51b, an denen die Lagereinheit 20 montiert ist. Anschläge 52a, 52b begrenzen die Bewegung des Läufers 10'. In den Figuren 2a, 2b nicht sichtbare Gummidämpfer an den Rückseiten der Anschläge 52a, 52b verhindern dabei Beschädigungen am Läufer 10' und/oder am Werkzeug.

Ein Messkopf 53 und ein in den Figuren 2a, 2b nicht sichtbares Maßband am Läufer 10' dienen einer genauen Kontrolle der Bewegung des Läufers 10' und damit eines daran zu befestigenden Werkzeugs. Insbesondere kann damit eine Ausdehnung des Läufers in Richtung der Längsachse und eine damit verbundene entsprechende axiale Verlagerung des Werkzeugwirkpunktes bei einer Steuerung der Antriebseinheit 40 berücksichtigt werden.

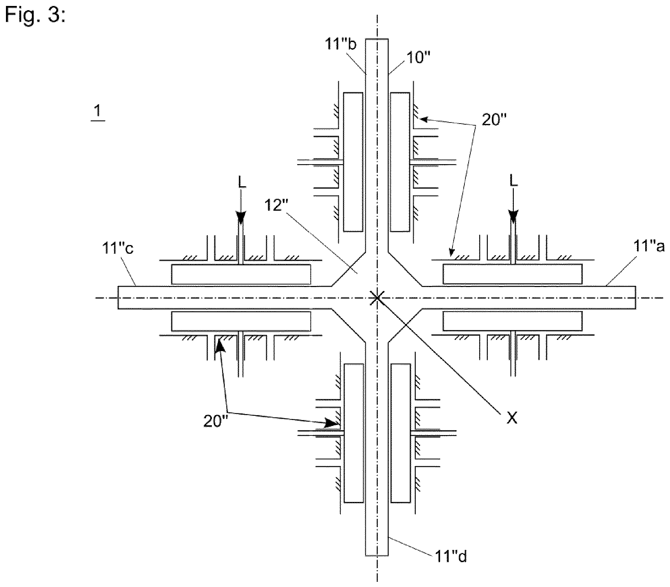

Die Fig. 3 zeigt ein Ausführungsbeispiel einer erfindungsgemäßen Lageranordnung 1", die einen Läufer 10" und eine Lagereinheit 20" umfasst, in welcher der Läufer 10" in Richtung seiner Längsachse X hin und her beweglich eingespannt ist.

Der Läufer 10" weist dabei genau vier Flügel 11"a, 11"b, 11"c, 11"d auf, die sich jeweils radial und axial zur Längsachse X erstrecken. Die Flügel stehen dabei jeweils von einem Läuferkern 12" ab und sind dabei senkrecht zu ihren jeweils benachbarten Flügeln angeordnet, schließen mit diesen also jeweils einen Winkel von 90° ein. Insbesondere weist der Läufer 10" einen kreuzförmigen Querschnitt orthogonal zur Längsachse X auf. Dies ermöglicht eine besonders einfache und zugleich präzise Positionierung des Läufers relativ zur aerostatischen Lagereinheit 20".

Weitere in der Fig. 3 ersichtliche Eigenschaften der Lageranordnung 1" entsprechen Merkmalen der in den Figuren 1a, 1b gezeigten Lageranordnung und werden daher zur Vermeidung von Dopplungen hier nicht erneut beschrieben.

### Bezugszeichen

1, 1' Lageranordnung
10, 10', 10" Läufer
10| t₁ Läufer 10 bei erster Temperatur
10| t₂ maximal ausgedehnter Läufer 10 bei zweiter Temperatur
11a, 11b Flügel
11'a, 11'b Flügel
11"a, 11"b, 11"c, 11"d Flügel
12, 12', 12" stabartiger Läuferkern
13' Befestigungsmittel
20, 20', 20" aerostatische Lagereinheit
21a, 21b, 21c, 21d, 21'a, 21'b Luftlager der Lagereinheit
22a, 22b, 22c, 22d Drucklufteinlass
30 Werkzeug
31 Werkzeugwirkpunkt (TCP)
40 Antriebseinheit
50 Rahmenstruktur
51a, 51b Führungsbacke
52a, 52b Anschläge
53 Messkopf
100 Linearachssystem
B Zwischenraumbreite
d Flügeldicke
D Durchmesser des Läuferkerns
Eₐ, E_{b} Flügel-Symmetrieebene
E Läufer-Symmetrieebene
L Luftzufuhr
O₁, O₂, O₃, O₄ Oberflächen der Flügel
R Bewegungsrichtung des Läufers relativ zur Lagereinheit
S Luftspalt
X Längsachse

## Patentansprüche

1. Lageranordnung (1, 1', 1"), die einen Läufer (10, 10', 10") und eine aerostatische Lagereinheit (20, 20', 20") umfasst;
wobei der Läufer eine Längsachse (X) aufweist, in deren Richtung er relativ zur Lagereinheit (20, 20', 20") linear hin- und herbeweglich ist und auf der ein zentraler Werkzeugwirkpunkt (31) eines am Läufer befestigten oder zu befestigenden Werkzeugs (30) liegt;
und wobei der Läufer mindestens zwei winklig zueinander angeordnete Flügel (11a, 11b, 11'a, 11'b, 11"a, 11"b, 11"c, 11"d) umfasst, die in der aerostatischen Lagereinheit (20, 20', 20") eingespannt sind und die sich jeweils radial zu der Längsachse (X) des Läufers erstrecken.

2. Lageranordnung gemäß Anspruch 1, wobei die Flügel (11a, 11b, 11'a, 11'b, 11"a, 11"b, 11"c, 11"d) jeweils als Platten ausgebildet sind, die sich in Richtung der Längsachse (X) erstrecken.

3. Lageranordnung gemäß einem der vorhergehenden Ansprüche, wobei die Flügel (11a, 11b, 11'a, 11'b, 11"a, 11"b, 11"c, 11"d) von einem Läuferkern (12, 12', 12") abstehen, in dessen Zentrum die Längsachse (X) verläuft und dessen Durchmesser (D) größer ist als eine maximal auftretende Flügeldicke (d).

4. Lageranordnung gemäß einem der vorhergehenden Ansprüche, die weiterhin das am Läufer befestigte Werkzeug (30) umfasst.

5. Lageranordnung gemäß Anspruch 4, wobei das Werkzeug (30) einen Greifer, einen Sauger, einen Laser, ein Schneidwerkzeug, eine Markiernadel, einen Plasmabrenner und/oder ein Objektiv umfasst und/oder als ein Instrument zur Laserstrukturierung von Wafern ausgebildet ist.

6. Lageranordnung gemäß einem der vorhergehenden Ansprüche, wobei der Läufer (10, 10', 10") senkrecht zur Längsachse (X) einen kreuz- oder L- oder T- oder Y-förmigen Querschnitt aufweist, dessen Schenkel durch die Flügel (11a, 11b, 11'a, 11'b, 11"a, 11"b, 11"c, 11"d) gebildet werden.

7. Lageranordnung gemäß einem der vorhergehenden Ansprüche, wobei der Läufer (10, 10', 10") symmetrisch zu einer die Längsachse (X) enthaltenden Läufer-Symmetrieebene (E) ausgebildet ist.

8. Linearachssystem (100) mit einer Lageranordnung (1, 1', 1") gemäß einem der vorhergehenden Ansprüche sowie einer Antriebseinheit (40), die dazu eingerichtet ist, den Läufer (10, 10', 10") der Lageranordnung (1, 1', 1") in Richtung seiner Längsachse (X) relativ zur aerostatischen Lagereinheit (20, 20', 20") hin und her zu bewegen.

9. Linearachssystem (100) nach Anspruch 8, **dadurch gekennzeichnet, dass** sie als ein Kurzhubaktor ausgebildet ist.

10. Anlage zur Fertigung und/oder Bearbeitung von Bauteilen, die mindestens ein Linearachssystem (100) gemäß Anspruch 8 oder 9 umfasst, wobei die Lageranordnung (1, 1', 1") das am Läufer (10, 10', 10") befestigte oder zu befestigende Werkzeug (30) umfasst.

## Claims

1. A bearing assembly (1, 1', 1"), comprising a mover (10, 10', 10") and an aerostatic bearing unit (20, 20', 20"); wherein the mover has a longitudinal axis (X), in the direction of which the mover can be linearly moved back and forth relative to the bearing unit (20, 20', 20") and on which a central tool center point (31) of a tool (30) fastened or to be fastened to the mover lies;
and wherein the mover comprises at least two wings (11a, 11b, 11'a, 11'b, 11"a, 11"b, 11"c, 11"d) arranged at an angle to one another, said wings being clamped in the aerostatic bearing unit (20, 20', 20") and each extending radially with respect to the longitudinal axis (X) of the mover.

2. The bearing assembly according to claim 1, wherein the wings (11a, 11b, 11'a, 11'b, 11"a, 11"b, 11"c, 11"d) are each designed as plates extending in the direction of the longitudinal axis (X).

3. The bearing assembly according to any one of the preceding claims, wherein the wings (11a, 11b, 11'a, 11'b, 11"a, 11"b, 11"c, 11"d) protrude from a mover core(12, 12', 12"), through the center of which the longitudinal axis (X) extends and whose diameter (D) is greater than a maximum wing thickness (d).

4. The bearing assembly according to any of the preceding claims, further comprising the tool (30) fastened to the mover.

5. The bearing assembly according to claim 4, wherein the tool (30) comprises a gripper, a suction cup, a laser, a cutting tool, a marking needle, a plasma torch and/or a lens and/or is designed as an instrument for structuring wafers using a laser.

6. The bearing assembly according to any of the preceding claims, wherein the mover (10, 10', 10") has a cross-shaped, L-shaped, T-shaped or Y-shaped cross section perpendicularly to the longitudinal axis (X), the legs of which are formed by the wings (11a, 11b, 11'a, 11'b, 11"a, 11"b, 11"c, 11"d).

7. The bearing assembly according to any one of the preceding claims, wherein the mover (10, 10', 10") is designed symmetrically to a mover symmetry plane (E) containing the longitudinal axis (X).

8. A linear axis system (100) comprising a bearing assembly (1, 1', 1") according to any one of the preceding claims and a drive unit (40) which is designed to move the mover (10, 10', 10") of the bearing assembly (1, 1', 1") back and forth in the direction of its longitudinal axis (X) relative to the aerostatic bearing unit (20, 20', 20.

9. The linear axis system (100) according to claim 8, **characterized in that** said system is designed as a short-stroke actuator.

10. An installation for producing and/or machining components, comprising at least one linear axis system (100) according to either claim 8 or claim 9, wherein the bearing assembly (1, 1', 1") comprises the tool (30) that is or is to be fastened to the mover (10, 10', 10").

## Revendications

1. Ensemble de supports (1, 1', 1") qui comprend un élément mobile (10,10', 10'') et une unité de supports aérostatique (20, 20', 20"),
sachant que l'élément mobile comporte un axe longitudinal (X) dans la direction duquel il est mobile en va-et-vient de façon linéaire par rapport à l'unité de supports (20, 20, 20'') et sur lequel se situe un point d'action d'outil (31) central d'un outil (30) fixé ou à fixer sur l'élément mobile,
et sachant que l'élément mobile comprend au moins deux ailes (11a, 11b, 11'a, 11'b, 11''a, 11''b, 11''c, 11''d) disposées de façon angulaire l'une par rapport à l'autre, qui sont serrées dans l'unité de supports aérostatique (20, 20', 20'') et qui s'étendent respectivement de façon radiale par rapport à l'axe longitudinal (X) de l'élément mobile.

2. Ensemble de supports selon la revendication 1, sachant que les ailes (11a, 11b, 11'a, 11'b, 11''a, 11''b, 11''c, 11''d) sont constituées respectivement sous la forme de plaques, qui s'étendent en direction de l'axe longitudinal (X).

3. Ensemble de supports selon l'une quelconque des revendications précédentes, sachant que les ailes (11a, 11b, 11'a, 11'b, 11''a, 11''b, 11"c, 11''d) ressortent d'un noyau d'élément mobile (12, 12', 12'') dans le centre duquel passe l'axe longitudinal (X) et dont le diamètre (D) est plus grand qu'une épaisseur d'aile (d) figurant au maximum.

4. Ensemble de supports selon l'une quelconque des revendications précédentes, qui comprend en plus l'outil (30) fixé sur l'élément mobile.

5. Ensemble de supports selon la revendication 4, sachant que l'outil (30) comprend un préhenseur, un élément d'aspiration, un laser, un outil coupant, une aiguille de marquage, un chalumeau à plasma et/ou un objectif et/ou est constitué sous la forme d'un instrument pour la structuration au laser de plaquettes de semiconducteurs.

6. Ensemble de supports selon l'une quelconque des revendications précédentes, sachant que l'élément mobile (10, 10', 10'') comporte perpendiculairement à l'axe longitudinal (X) une section en forme de croix, de L ou de T ou d'Y, dont les branches sont formées par les ailes (11a, 11b, 11'a, 11'b, 11''a, 11''b, 11''c, 11''d).

7. Ensemble de supports selon l'une quelconque des revendications précédentes, sachant que l'élément mobile (10, 10', 10") est constitué de façon symétrique par rapport à un plan de symétrie d'élément mobile (E) contenant l'axe longitudinal (X).

8. Système d'axes linéaires (100) avec un Ensemble de supports (1, 1', 1") selon l'une quelconque des revendications précédentes ainsi qu'une unité d'entraînement (40), qui est agencée pour déplacer en va-et-vient l'élément mobile (10, 10', 10") de l'ensemble de supports (1, 1', 1") en direction de son axe longitudinal (X) par rapport à l'unité de supports (20, 20', 20'') aérostatique.

9. Système d'axe linéaire (100) selon la revendication 8, **caractérisé en ce qu'**il est constitué sous la forme d'un actionneur de course courte.

10. Installation de fabrication et/ou d'usinage de composants, qui comprend au moins un système d'axes linéaires (100) selon la revendication 8 ou 9, sachant que l'Ensemble de supports (1, 1', 1") comprend l'outil (30) fixé ou à fixer sur l'élément mobile (10, 10', 10").
